# EUROPEAN PATENT APPLICATION

(11) **EP 1 306 408 A1**
(43) Date of publication of application: **02.05.2003**
(21) Application number: 01936973.5
(22) Date of filing: 12.06.2001
(51) Int. Cl.: C08L 51/04, C08K 5/098

(54) **RESIN COMPOSITION IMPROVED IN POWDER CHARACTERISTICS AND PROCESS FOR THE PRODUCTION THEREOF**

(30) Priority: 15.06.2000 JP 2000180042
(71) Applicant: KANEKA CORPORATION, Osaka-shi, Osaka 530-8288 (JP)
(72) Inventor: TAKEDA, Yoshinori, Takasago-shi, Hyogo 676-0026 (JP); YOSHIMI, Tomoyuki, Kako-gun, Hyogo 675-0163 (JP); WACHI, Shun, Takasago-shi, Hyogo 676-0025 (JP); MATSUBA, Kuniyoshi, Kakogawa-shi, Hyogo 675-0112 (JP)
(74) Representative: VOSSIUS & PARTNER
(86) International application number: JP0104963
(87) International publication number: WO01096468

(57) **Abstract**

A powdery resin composition having excellent ordinary temperature and low temperature powder characteristics, in particular, excellent blocking resistance, and comprising 100 parts by weight of a graft copolymer which contains a rubber as a trunk polymer and which is obtained by emulsion polymerization using a higher fatty acid salt, 0.1 to 10 parts by weight of a crosslinked polymer of 30 to 60 % by weight of methyl methacrylate, 65 to 35 % by weight of an aromatic vinyl monomer, 0.1 to 25 % by weight of a crosslinking monomer and 0 to 30 % by weight of other copolymerizable monomer, and 0.1 to 10 parts by weight of a lubricant. According to the present invention, powder characteristics in low temperature storage of conventional graft copolymers containing a large amount of a rubber, which have been used as impact modifier for vinyl chloride resins, can be remarkably improved.

## Description

### TECHNICAL FIELD

The present invention relates to a powdery resin composition improved in powder characteristics in storage at low temperatures and a process for preparing the same. More particularly, the present invention relates to a resin composition having an excellent blocking resistance which is useful as an impact modifier for thermoplastic resins such as vinyl chloride resins, and a process for preparing the same.

### BACKGROUND ART

Various graft copolymers containing a rubber have been conventionally used as an impact modifier for thermoplastic resins. These graft copolymers, particularly those having a high rubber content, have the problem that they are easy to cause blocking during the storage and transportation.

Improvement in powder characteristics of synthetic resins, particularly bulk density and blocking resistance of powders of synthetic resins containing a rubber component, has been investigated in various ways. For instance, JP-A-57-59929 proposes improving the blocking resistance by coagulating latex of a graft copolymer in a gaseous phase. It is disclosed therein that the blocking resistance is improved to a great degree in this manner.

In recent years, improvement in powder characteristics such as blocking resistance has been increasingly required with application of automatic gauging to powder and change of transportation lines to large scale. Also, due to worldwide spread of demand, powders are stored and transported after the production thereof, during which they receive a wide range of heat history from low temperatures to high temperatures and, for the reason, further improvement in powder characteristics has also been investigated. For instance, JP-A-1-26644 discloses adding a lubricant to slurry of a conventional graft copolymer containing a large amount of a rubber.

Besides, in order to improve the powder characteristics, it is also proposed to add, to slurry of a conventional graft copolymer containing a large amount of a rubber, a hard multistage polymer containing methyl methacrylate as an essential component, as disclosed in JP-A-4-300947, and a crosslinked polymer of 30 to 60 % by weight of methyl methacrylate, 65 to 35 % by weight of an aromatic vinyl monomer, 0.1 to 2.5 % by weight, of a crosslinking monomer and 0 to 30 % by weight of other copolymerizable monomers, as disclosed in JP-A-7-3106.

Among these methods of the improvement, the method by the addition of a crosslinked polymer has the highest effect on powder characteristics in storage at ordinary temperature. However, even this method has no sufficient effect on powder characteristics in storage at low temperatures. Also, evaluation of powder characteristics in these proposed methods does not give consideration to influence of temperature drop during the storage. Therefore, the evaluation has a problem that it does not meet the powder characteristics required when synthetic resin powder is actually stored in cold district.

An object of the present invention is to improve the powder characteristics, particularly blocking resistance, of conventional graft copolymers containing a large amount of a rubber in storage at low temperatures.

A further object of the present invention is to provide an impact modifier having excellent blocking resistance at ordinary temperature and low temperatures and suitable for use in thermoplastic resins such as vinyl chloride resins.

Another object of the present invention is to provide a process for improving the ordinary and low temperature powder characteristics, particularly blocking resistance, of conventional graft copolymers containing a rubber.

### DISCLOSURE OF INVENTION

The present inventors have found that not only the powder characteristics in storage at ordinary temperature but also the powder characteristics in storage at low temperatures can be drastically improved by preparing a graft copolymer containing a rubber by emulsion polymerization using a higher fatty acid salt as an emulsifier and incorporating therein a specific crosslinked polymer and a lubricant.

Thus, in accordance with the present invention, there is provided a powdery resin composition comprising 100 parts by weight of a graft copolymer which contains a. rubber as a trunk polymer and which is obtained by emulsion polymerization of a vinyl monomer using a higher fatty acid salt, 0.1 to 10 parts by weight of a crosslinked polymer prepared by polymerization of 30 to 60 % by weight of methyl methacrylate, 65 to 35 % by weight of an aromatic vinyl monomer, 0.1 to 25 % by weight of a crosslinking monomer and 0 to 30 % by weight of other copolymerizable monomer, and 0.1 to 10 parts by weight of a lubricant.

The present invention also provides a process for preparing a powdery resin composition comprising the steps of coagulating a graft copolymer latex obtained by emulsion polymerization of a vinyl monomer using a higher fatty acid salt in the presence of a rubber to give a slurry, adding to 100 parts by weight (solid basis) of the slurry 0.1 to 10 parts by weight of a crosslinked polymer of 30 to 60 % by weight of methyl methacrylate, 65 to 35 % by weight of an aromatic vinyl monomer, 0.1 to 25 % by weight of a crosslinking monomer and O to 30 % by weight of other copolymerizable monomer and 0.1 to 10 parts by weight of a lubricant, and recovering a powder from the resulting mixture. Preferably the lubricant is added in the form of emulsion.

### BEST MODE FOR CARRYING OUT THE INVENTION

The graft copolymer used in the present invention is obtained by using a rubber as a trunk polymer and polymerizing a vinyl monomer in the presence of the rubber. Any of known rubber-containing graft copolymers, e.g., graft copolymers conventionally used as impact modifier for thermoplastic resins, are applicable to the present invention. For example, as graft copolymers intended to incorporate into vinyl chloride resins are known ABS resin (acrylonitrile-butadiene-styrene copolymer), MBS resin (methyl methacrylate-butadiene-styrene copolymer), MABS resin (methyl methacrylate-acryrolnitrile-butadiene-styrene copolymer), AAS resin (alkyl acrylate-acryrolnitrile-styrene copolymer), and the like.

In the present invention, these graft copolymers are prepared by a usual emulsion polymerization method, and a higher fatty acid salt is used as an emulsifier. A rubber as a trunk polymer is firstly prepared by emulsion polymerization method using a higher fatty acid salt as an emulsifier, and a graft monomer component is then subjected to graft copolymerization in the resulting rubber latex.

Examples of the higher fatty acid salt used in the graft copolymerization mentioned above are lauric acid salts, myristic acid salts, palmitic acid salts, stearic acid salts, oleic acid salts, and the like. Salts of fatty acids having 14 to 22 carbon atoms are preferably used. The higher fatty acid salts may be a mixture of different kinds of fatty acid salts, like a beef tallow soap obtained from beef tallow fatty acid, and a mixture containing a higher fatty acid salt as mentioned above as one of the components can also be used in the present invention. The cations of the higher fatty acid salts as a carboxylic acid salt type emulsifier are alkali metal ions, ammonium ion and the like. The alkali metal ions include potassium ion, sodium ion, lithium ion and the like. These higher fatty acid salts may be used alone or in admixture thereof. Also, the higher fatty acid salts may be used in combination with a minor amount of other surface active agents.

Examples of a monomer for producing the rubber which constitutes the trunk polymer are, for instance, a diene monomer such as butadiene or isoprene, an alkyl acrylate monomer such as butyl acrylate or octyl acrylate, and the like. These monomers may be copolymerized with a minor amount, especially at most 35 % by weight, more especially 0 to 5 % by weight, based on the trunk polymer, of other copolymerizable monomer or a crosslinking agent.

Examples of the other copolymerizable monomers are, for instance, an alkyl methacrylate such as methyl methacrylate, an alkyl acrylate, a vinyl cyanide compound such as acrylonitrile, an aromatic vinyl compound such as styrene, and the like. These may be used alone or in admixture thereof.

Examples of the crosslinking agent are, for instance, a divinyl compound such as divinyl benzene, a di(meth)acrylate compound such as ethylene glycol diacrylate or polyethylene glycol dimethacrylate, and other polyfunctional monomers known as a crosslinking agent or crosslinking monomer. These may be used alone or in admixture thereof.

Representative examples of the rubber are, for instance, polybutadiene rubber, a butadiene copolymer rubber prepared from butadiene and a monomer copolymerizable therewith such as styrenebutadiene rubber (SBR) or acrylonitrile-butadiene rubber (NBR), polyisoprene rubber, an acrylic rubber containing an alkyl acrylate as a main component, and the like.

Examples of the monomer to be graft-copolymerized in the presence of a rubber are, for instance, an alkyl methacrylate such as methyl methacrylate, especially an alkyl methacrylate having a C₁ to C₁₂ alkyl group, an alkyl acrylate such as butyl acrylate, especially an alkyl acrylate having a C₁ to C₁₂ alkyl group, a vinyl cyanide compound such as acrylonitrile or methacrylonitrile, an aromatic vinyl compound such as styrene, α-methylstyrene or chlorostyrene, and the like. These may be used alone or in admixture thereof.

With respect to the proportions of the trunk polymer and the graft component in the polymer obtained by the graft copolymerization, it is preferable, from the viewpoint of preventing a graft copolymer from forming mass during the step of coagulation and from the viewpoint of enhancing the impact resistance of final molded products of a thermoplastic resin to a sufficient level, that the content of the trunk rubber polymer in the graft copolymer is from 40 to 85 % by weight, especially 60 to 80 % by weight, and the content of the graft component is from 60 to 15 % by weight, especially 40 to 20 % by weight.

Graft copolymer latex obtained by the graft copolymerization is coagulated by adding a coagulant to the latex, thereby converting the latex into a slurry. Examples of the coagulant are an inorganic acid such as sulfuric acid, hydrochloric acid, phosphoric acid or nitric acid, an inorganic salt of these acids such as sodium chloride or calcium chloride, an organic acid such as acetic acid, and the like. These may 5 be used alone or in admixture thereof. The concentration of the slurry is usually from about 5 to about 40 % by weight.

In the present invention, the slurry of the graft copolymer is mixed with 0.1 to 10 parts by weight, preferably 0.5 to 4 parts by weight, of a crosslinked polymer which may be in the form of a latex (the solid concentration of which is usually from about 0.5 to about 10 % by weight) or a slurry formed by coagulation of the latex (the solid concentration of which is usually from about 0.5 to about 10 % by weight). In the case that the crosslinked polymer is added in the form of a latex, the resulting mixture is then coagulated. Since the graft 5 copolymer slurry may contain a sufficient amount of a coagulant to coagulate the crosslinked polymer, it is not always required to add a coagulant to coagulate the crosslinked polymer.

The crosslinked polymer is obtained by polymerizing a monomer component comprising 30 to 60 % by weight of methyl methacrylate, 65 to 35 % by weight of an aromatic vinyl monomer, 0.1 to 25 % by weight of a crosslinking monomer and 0 to 30 % by weight of other copolymerizable monomers, preferably a monomer component comprising 35 to 55 % by weight of methyl methacrylate, 50 to 40 % by weight of an aromatic vinyl monomer, 0.1 to 10 % by weight, especially 3 to 7 % by weight, of a crosslinking monomer and 0 to 10 % by weight of other copolymerizable monomers. The latex of the crosslinked polymer is obtained by emulsion-polymerizing these monomers in a usual manner.

Examples of the aromatic vinyl monomer used in the preparation of the crosslinked polymers are, for instance, styrene, α-methylstyrene and other styrene derivatives. Examples of the other copolymerizable monomers are a vinyl cyanide compound such as acrylonitrile, acrylic acid, methacrylic acid, an alkyl acrylate, an alkyl methacrylate, a graftlinking agent, and the like.

Examples of the crosslinking monomer used in the preparation of the crosslinked polymer are, compounds having at least two polymerizable functional groups in the molecule, e.g., divinyl benzene, 1,3-butylene glycol dimethacrylate, trimethylolpropane tri(meth)acrylate, allyl methacrylate, polyethylene glycol di(meth)acrylate, 1,4-butanediol di(meth)acrylate, 1,6-hexanediol (meth)acrylate, diallyl maleate, diallyl itaconate, allyl (meth)acrylate, triallyl cyanurate, triallyl isocyanurate, diallyl phthalate, triallyl trimesate, and other divinyl, diallyl and di(meth)acrylate compounds.

If the content of the methyl methacrylate in the crosslinked polymer do not fall within the range of 30 to 60 % by weight, or if the content of the aromatic vinyl monomer in the crosslinked polymer do not fall within the range of 35 to 65 % by weight, the transparency of vinyl chloride resin molded articles is deteriorated since the refraction index of the obtained crosslinked polymer deviates more than 0.1 from that of a vinyl chloride resin.

Also, if the content of the crosslinking monomer in the crosslinked polymer is less than 0.1 % by weight, the blocking resistance of the graft copolymer powder is not sufficiently improved, and if the content is more than 25 % by weight, a large number of fish eyes generate.

When the amount of the crosslinked polymer is within the range of 0.1 to 10 parts by weight per 100 parts by weight of the graft copolymer, the effect of improving the blocking resistance of synthetic resin powder is large and, moreover, deterioration of the transparency and impact resistance of final molded articles and generation of many fish eyes do not occur.

In the present invention, at least one lubricant is added to the graft copolymer in an amount of 0.01 to 10 parts by weight, preferably 0.2 to 3 parts by weight, per 100 parts by weight of the graft copolymer. If the amount of the lubricant is less than 0.01 part by weight, the blocking resistance of synthetic resin powder is not sufficiently improved. If the amount is more than 10 parts by weight, physical properties that thermoplastic resins to be incorporated with the powdery resin composition of the present invention have are deteriorated.

Examples of the lubricant are a fatty acid such as stearic acid, . 12-hydroxystearic acid or behenic acid, a fatty acid metal salt such as zinc stearate or calcium stearate, a fatty acid amide such as oleic amide, ethylenebisamide or erucic amide, butyl stearate, stearyl stearate, a sorbitan stearic acid ester such as sorbitan monostearate, a pentaerythritol stearic acid ester such as pentaerythritol tetrastearate, a glycerol fatty acid ester such as glycerol monobehenate, glycerol mono-12-hydroxystearate, glycerol monostearate or glycerol monolaurate, a fatty acid ester such as hardened caster oil, a higher alcohol such stearyl alcohol, and the like. Of these, preferable are glycerol monobehenate, glycerol mono-12-hydroxystearate, pentaerythritol tetrastearate, hardened caster oil, 12-hydroxystearic acid, ethylenebisamide, oleic amide, glycerol monostearate and glycerol monolaurate, since the effect of improving the blocking resistance is large. The lubricants may be used alone or in admixture thereof.

The lubricant is added as it is or in the form- of an emulsion or a solution to the graft copolymer after coagulating latex of the graft copolymer, or after heat-treating the coagulated latex, or after dehydrating the coagulated latex, or after drying the graft copolymer. It is preferable to add the lubricant to slurry obtained by the coagulation of the latex, since the effect is the largest.

Preferable examples of an emulsifier used for the preparation of the emulsion of lubricant are higher fatty acid salts as mentioned above, e.g., alkali metal salts and ammonium salts of higher fatty acids such as lauric acid, myristic acid, palmitic acid, stearic acid, oleic acid, rhodinic acid, beef tallow fatty acid, and the like.

The synthetic resin powder of the present invention having improved powder characteristics in the storage at low temperatures is obtained by treating a mixed slurry containing the graft copolymer and the crosslinked polymer in a usual manner, for example, by heat-treating the slurry through steam, electric heater or the like, e.g., at a temperature of 50 to 100°C for 10 minutes to 1 hour, dehydrating and drying.

The present invention is more specifically explained by means of examples, but it is to be understood that the present invention is not limited to only these examples. In the examples, all parts and % are by weight unless otherwise noted.

### EXAMPLE 1

A pressure vessel for polymerization equipped with a stirrer was charged with 200 parts of deionized water, 2 parts of beef tallow sodium soap, 0.002 part of ferrous sulfate, 0.005 part of disodium ethylenediaminetetraacetate, 0.2 part of potassium tertiary phosphate, 0.2 part of sodium formaldehyde sulfoxylate, 100 parts of a monomer component composed of 80 % of butadiene and 20 % of styrene, and 0.1 part of diisopropylbenzene hydroperoxide. The polymerization was carried out at 40°C for 15 hours to give a rubber latex (R-1). The polymerization conversion was 99 %.

A polymerization vessel equipped with a stirrer was charged with 250 parts (solid matter 75 parts) of the rubber latex (R-1), 25 parts of water, 0.2 part of beef tallow sodium soap, 0.002 part of ferrous sulfate, 0.004 part of disodium ethylenediaminetetraacetate, 0.1 part of sodium formaldehyde sulfoxylate, 12.5 parts of methyl methacrylate and 12.5 parts of styrene. The polymerization was carried out at 60°C for 4 hours to give a graft copolymer latex (G-1). The polymerization conversion was 99 %.

A polymerization vessel equipped with a stirrer was charged with 200 parts of deionized water, 0.5 part of sodium oleate, 0.002 part of ferrous sulfate, 0.005 part of disodium ethylenediaminetetraacetate and 0.2 part of sodium formaldehyde sulfoxylate. After elevating the temperature to 60°C, a mixture of 100 parts of a monomer component composed of 55 % of methyl methacrylate, 40 % of styrene and 5 % of 1,3-butylene glycol dimethacrylate with 0.3 part of cumene hydro peroxide was continuously added to the vessel over 7 hours. During this period, 0.5 part portions of sodium oleate were added 2 hours, 4 hours and 6 hours after starting the polymerization. After the completion of the addition of the monomer mixture, the polymerization was further continued for 2 hours to give a crosslinked polymer latex (L-1). The polymerization conversion was 99 %.

To 300 parts (solid matter 100 parts) of the graft copolymer latex (G-1) was added 40 parts of a 10 % aqueous solution of hydrochloric acid to coagulate the latex. To the obtained slurry were added with stirring 4.5 parts (solid matter 1.5 parts) of the crosslinked polymer latex (L-1) and 30 parts of a 1 % emulsion of glycerol monobehenate (glycerol monobehenate 0.3 part and potassium rhodinate 0.1 part). After subsequently adding a 25 % aqueous solution of sodium hydroxide to adjust the pH of the slurry to 4.0, the slurry was heat-treated at 95°C for 15 minutes, dehydrated and dried to give a synthetic resin powder.

The blocking resistance of the obtained synthetic resin powder was measured by the following method. A cylindrical vessel having a diameter of 5 cm was charged with 30 g of the synthetic resin powder, and a load of 0.3 kg/cm² was applied to the powder at 30°C. Thereafter, the powder was kept under the loading in a thermostatic chamber at 30°C or 2°C for 20 hours to form a block. The obtained block was broken by applying a load, and the load required to break the block was evaluated as adhesion force of the block (evaluation of blocking resistance). The results are shown in Table 1.

### EXAMPLE 2

The procedure of Example 1 was repeated except that the 1 % emulsion of glycerol monobehenate was used in an amount of 60 parts (glycerol monobehenate 0.6 part and potassium rhodinate 0.2 part). The results are shown in Table 1.

### EXAMPLE 3

The procedure of Example 1 was repeated except that 30 parts of a 1 % emulsion of glycerol mono-12-hydroxystearate (glycerol mono-12-hydroxystearate 0.3 part and potassium rhodinate 0.1 part) was used instead of the 1 % emulsion of glycerol monobehenate. The results are shown in Table 1.

### EXAMPLE 4

The procedure of Example 3 was repeated except that the 1 % emulsion of glycerol mono-12-hydroxystearate was used in an amount of 60 parts (glycerol mono-12-hydroxystearate 0.6 part and potassium rhodinate 0.2 part). The results are shown in Table 1.

### EXAMPLE 5

The procedure of Example 1 was repeated except that 30 parts of a 1 % emulsion of pentaerythritol tetrastearate (pentaerythritol tetrastearate 0.3 part and potassium rhodinate 0.1 part) was used instead of the 1 % emulsion of glycerol monobehenate. The results are shown in Table 1.

### EXAMPLE 6

The procedure of Example 1 was repeated except that 30 parts of a 1 % emulsion of hardened caster oil (hardened caster oil 0.3 part and potassium rhodinate 0.1 part) was used instead of the 1 % emulsion of glycerol monobehenate. The results are shown in Table 1.

### EXAMPLE 7

The procedure of Example 1 was repeated except that 30 parts of a 1 % emulsion of 12-hydroxystearic acid (12-hydroxystearic acid 0.3 part and potassium rhodinate 0.1 part) was used instead of the 1 % emulsion of glycerol monobehenate. The results are shown in Table 1.

### EXAMPLE 8

The procedure of Example 1 was repeated except that 30 parts of a 1 % emulsion of oleic amide (oleic amide 0.3 part and potassium rhodinate 0.1 part) was used instead of the 1 % emulsion of glycerol monobehenate. The results are shown in Table 1.

### COMPARATIVE EXAMPLE 1

The procedure of Example 1 was repeated except that no lubricant was used. The results are shown in Table 1.

### COMPARATIVE EXAMPLE 2

The procedure of Example 2 was repeated except that the crosslinked polymer latex (L-1) was not used. The results are shown in Table 1.

### COMPARATIVE EXAMPLE 3

The procedure of Example 4 was repeated except that the crosslinked polymer latex (L-1) was not used. The results are shown in Table 1.

As apparent from Table 1, all Examples wherein a crosslinked polymer and a lubricant are added together show that the adhesion force is low as compared with the Comparative Examples wherein a crosslinked polymer or a lubricant is added alone.

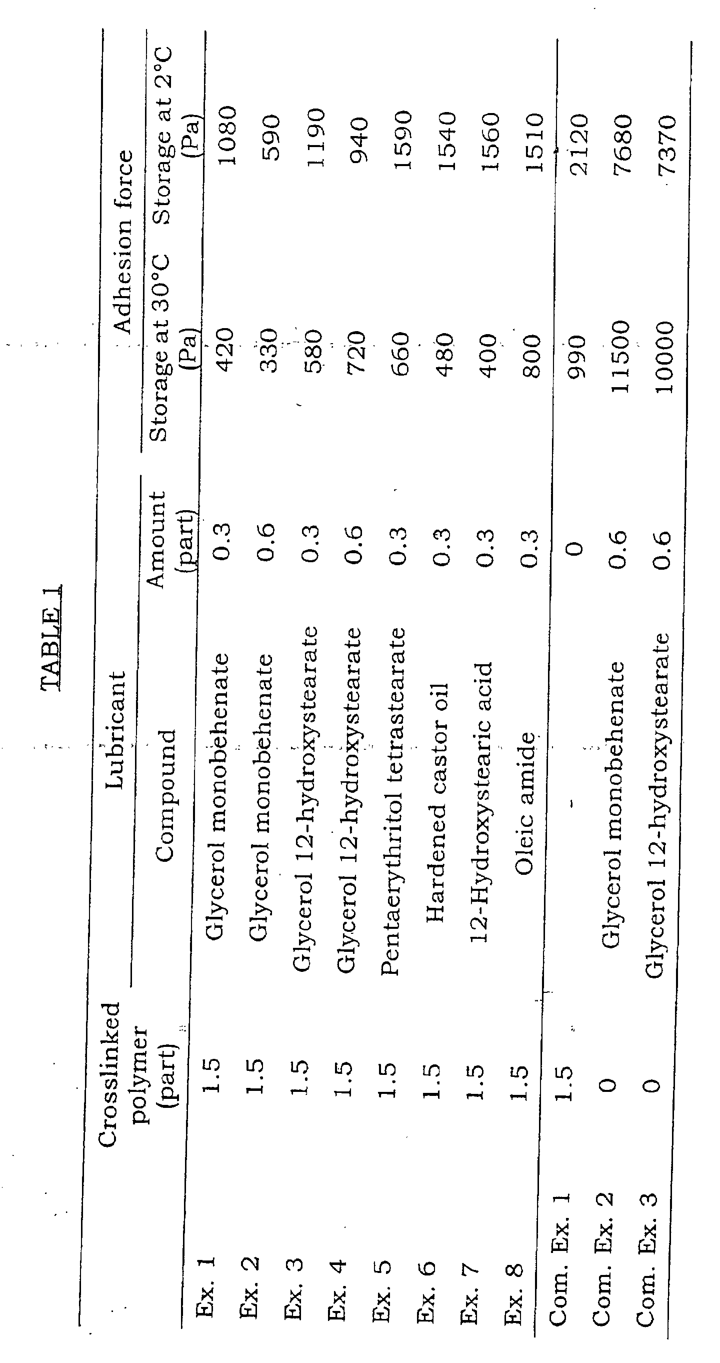

### INDUSTRIAL APPLICABILITY

According to the present invention, the low temperature powder characteristics, particularly the blocking resistance, of graft copolymers which are used as an impact modifier for vinyl chloride resins can be greatly improved, and good powder characteristics can be maintained even if stored within a wide range of temperature.

## Claims

1. A powdery resin composition comprising 100 parts by weight of a graft copolymer which contains a rubber as a trunk polymer and which is obtained by emulsion polymerization using a higher fatty acid salt, 0.1 to 10 parts by weight of a crosslinked polymer of 30 to 60 % by weight of methyl methacrylate, 65 to 35 % by weight of an aromatic vinyl monomer, 0.1 to 25 % by weight of a crosslinking monomer and 0 to 30 % by weight of other copolymerizable monomer, and 0.1 to 10 parts by weight of a lubricant.

2. The composition of Claim 1, wherein said lubricant is at least one member selected from the group consisting of glycerol monobehenate, glycerol mono-12-hydroxystearate, pentaerythritol tetrastearate, hardened caster oil, 12-hydroxystearic acid, ethylenebisamide, oleic amide, glycerol monostearate and glycerol monolaurate.

3. A process for preparing a powdery resin composition comprising the steps of coagulating a graft copolymer latex obtained by emulsion polymerization of a vinyl monomer using a higher fatty acid salt in the presence of a rubber to give a slurry, adding to 100 parts by weight (solid basis) of said slurry 0.1 to 10 parts by weight of a crosslinked polymer of 30 to 60 % by weight of methyl methacrylate, 65 to 35 % by weight of an aromatic vinyl monomer, 0.1 to 25 % by weight of a crosslinking monomer and 0 to 30 % by weight of other copolymerizable monomer and 0.1 to 10 parts by weight of a lubricant, and recovering a powder from the resulting mixture.

4. The process of Claim 3, wherein said lubricant is added in the form of emulsion.
